# EUROPÄISCHE PATENTSCHRIFT

(11) **EP 1 431 648 B1**
(45) Veröffentlichungstag und Bekanntmachung des Hinweises auf die Patenterteilung: **15.02.2006**
(21) Anmeldenummer: 03028853.4
(22) Anmeldetag: 16.12.2003
(51) Int. Cl.: F16L 37/32

(54) **Schnellkupplung mit der Möglichkeit eines Zusammenfügens bzw. eines Trennens bei Vorhandensein einer unter Druck stehenden Hydraulikflüssigkeit**
Quick coupling connector allowing connection / disconnection under pressure
Raccord rapide permettant une connection / deconnection sous pression

(30) Priorität: 20.12.2002 IT MI20022716
(43) Veröffentlichungstag der Anmeldung: 23.06.2004
(73) Patentinhaber: Faster S.p.A., 26027 Rivolta d'Adda (Cr) (IT)
(72) Erfinder: Arosio, Massimo, 24047 Treviglio (Bergamo) (IT)
(74) Vertreter: Mayer, Hans Benno

(56) Entgegenhaltungen:
- US-A- 2 471 237
- US-A- 2 854 258
- US-A- 5 002 254
- US-A- 5 918 633
- US-A1- 2002 014 770

## Beschreibung

Die vorstehende Erfindung betrifft eine Schnellkupplung mit der Möglichkeit eines Zusammenfügens bzw. eines Trennens bei Vorhandensein einer unter Druck stehenden Hydraulikflüssigkeit.

Auf dem Markt sind Schnellkupplungen bekannt geworden, besonders der Bauart "push-pull", die zum Verbinden von elastischen Rohrleitungen dienen, die eine unter Druck stehende Flüssigkeit aufnehmen.

Solche Schnellkupplungen sind z. B. aus US 2002/014770 und US 2 854 258 bekannt.

Diese Kupplungen bestehen aus einem rohrförmigen Bauteil sowie einem schaftartig ausgebildeten Bauteil, beide Bauteile können unter Aufbringung einer Schiebebewegung miteinander verbunden werden oder aber es besteht die Möglichkeit, diese Verbindung zu lösen, indem auf die Bauteile der Schnellkupplung eine Zugkraft ausgeübt wird.

Mit besonderem Vorteil kann der Verbindungsvorgang bzw. der Lösevorgang der Bauteile auch dann erfolgen, wenn im Inneren der Rohrleitungen und im Inneren der Bauteile der Schnellkupplung eine unter Druck stehende Flüssigkeit vorhanden ist.

Um die vorgenannten Vorgänge auch bei Vorhandensein eines hohen Druckes, der im Inneren der Rohrleitungen und im Inneren der Bauteile der Schnellkupplung ansteht, durchführen zu können, sind im Inneren des rohrförmigen Bauteiles der Schnellkupplung, Komponenten vorgesehen, welche die Möglichkeit eröffnen, eine ausreichend große Menge der sich im Inneren der rohrförmigen Schnellkupplung befindlichen Flüssigkeit abzuzapfen, wodurch der Verbindungsvorgang als auch der Lösevorgang zwischen den Bauteilen der Schnellkupplung vereinfacht wird.

In bekannten Schnellkupplungen erfolgt dieser Zapfvorgang zum Ableiten der Hydraulikflüssigkeit durch Vorsehung komplexer Zapfventile, die im Inneren der Schnellkupplung angeordnet sind.

Diese Zapfeinrichtungen bestehen aus Dichtungen, einem Ventilsitz sowie einer Feder, welche den Schaft eines Ventilstößels in eine Schließstellung drückt.

Beim Verbinden der Bauteile, die die Schnellkupplung bilden, wird die Zapfeinrichtung durch eine Schubbewegung beeinflusst, was zu einem Freilegen des vorher genannten Ventilsitzes führt, und die Möglichkeit eröffnet, dass ein Teil der unter Druck stehenden Hydraulikflüssigkeit abfließt.

Es ist erkennbar, dass die Vorsehung eines besonderen Zapfventiles die Möglichkeit eröffnet, einen Zusammenfüge- bzw. Lösevorgang auch dann durchzuführen, wenn die Schnellkupplung unter hydraulischem Druck steht, die Herstellung dieser Schnellkupplung hat sich aber auch in diesem Falle als ausgesprochen komplex erwiesen, da eine Vielzahl mechanischer Bauteile zur Schaffung des Zapfventiles notwendig sind, welches zudem im Inneren der Schnellkupplung angeordnet ist. Desweiteren führt die Vorsehung eines regelrechten Zapfventiles zu der Notwendigkeit, einen dafür vorgesehenen Raum vorzusehen, Notwendigkeit, die im Gegensatz zu dem Bedürfnis steht, Schnellkupplungen zu schaffen, die sich durch ständig verminderte Abmessungen auszeichnen.

Aufgabe der vorstehenden Erfindung ist es, eine Schnellkupplung vorzuschlagen, die aus einem rohrförmigen Bauteil und einem schaftartig ausgebildeten Bauteil bestehen, welche einen einfach durchführbaren Zusammenfügevorgang bzw. Lösevorgang der unter Druck stehenden Bauteile ermöglicht und ferner erlaubt, auf aufwendige Zapfventile zu verzichten und dabei das gewünschte Ziel durch einfache Abwandlung bereits vorhandener Bauteile im Inneren der Schnellkupplung zu erreichen, besonders für eine Schnellkupplung der Bauart push-pull.

Diese Aufgabe wird durch den Einsatz einer Schnellkupplung geschaffen, welche unter Druck im Anspruch 1 beschrieben ist.

Der Erfindungsgegenstand wird nun genauer beschrieben und in den beigefügten Zeichnungen dargestellt. Es zeigen:
Figur 1 eine Hälfte einer Schnellkupplung bestehend aus einer rohrförmigen Vorrichtung sowie aus einer schaftartig ausgebildeten Vorrichtung während eines Zusammenfügevorgangs;
Figur 2 ein Detail (X) gemäß Figur 1 in perfekter Abdichtstellung;
Figur 3 ein Detail eines Bauteiles, das zum Inneren des rohrförmigen Bauteiles verschoben wird, um einen Abflusskanal für die Hydraulikflüssigkeit freizugeben;
Figur 4 zeigt ein Detail des rohrförmigen Bauteiles beim Auseinandernehmen der Kupplungsteile unter Freilegung eines Abflusskanales für die Hydraulikflüssigkeit;
Figur 5 zeigt in perspektivischer Darstellung das rückwärtige Ende des rohrförmigen Bauteiles;
Figur 6 zeigt im Schnitt Teil des rohrförmigen Bauteiles sowie der Dichtung in Abdichtstellung;
Figur 7 zeigt das rückwärtige Ende des rohrförmigen Bauteiles in perspektivischer Darstellung;
Figur 8 zeigt im Schnitt das Dichtungsmittel in Abdichtlage;
Figur 9 zeigt eine weitere Ausführungsform eines rohrförmigen Bauteiles mit einer Zapfnute;
Figur 10 zeigt im Schnitt die Dichtung in Abdichtstellung;
Figur 11 zeigt in perspektivischer Darstellung eine weitere Ausführungsform der Zapfkanäle;

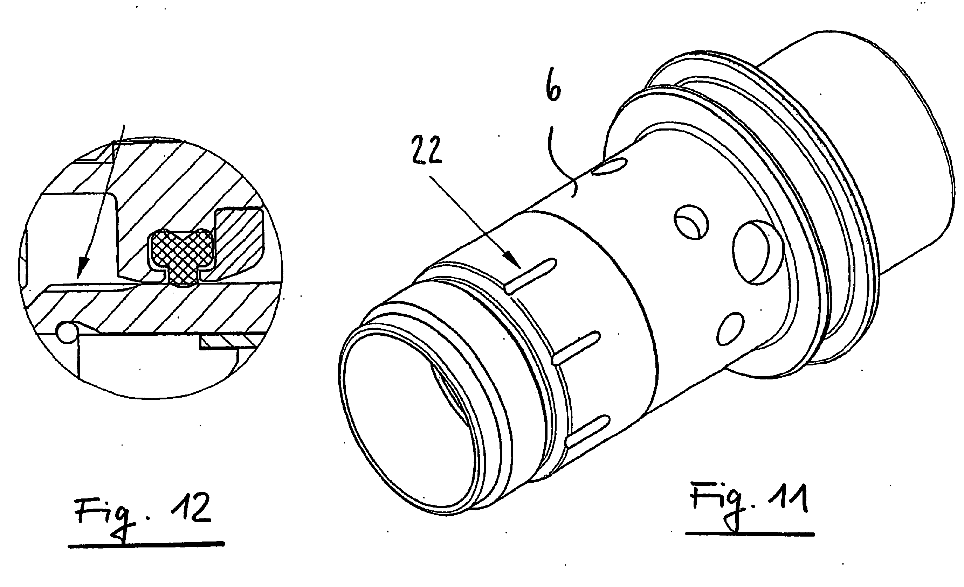

Figur 12 zeigt im Schnitt die Dichtung in Abdichtstellung;
Figur 13 zeigt in perspektivischer Darstellung eine weitere Ausführungsform des Endstückes des rohrförmigen Bauteiles;
Figur 14 zeigt im Schnitt die Dichtung in Abdichtstellung.

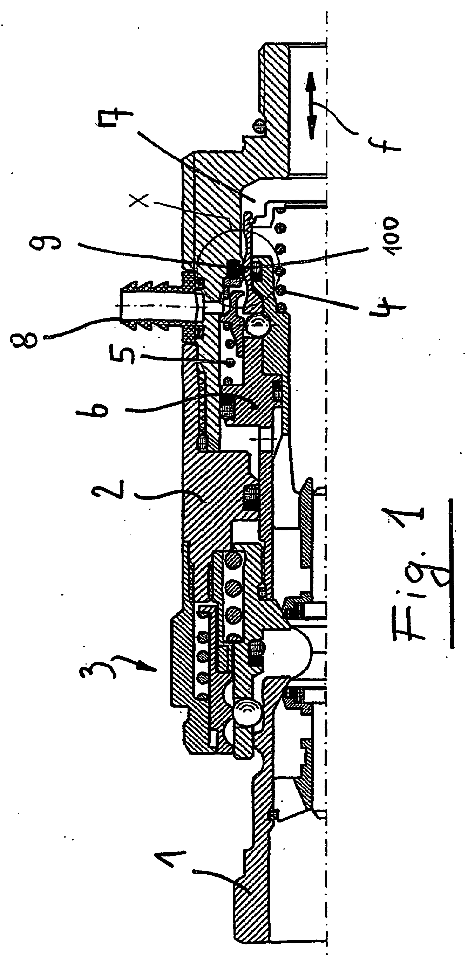

Der Figur 1 kann eine halbe Darstellung eines schaftartigen Bauteils 1 während des Einführvorganges in ein rohrförmiges Bauteil 2 einer an sich bekannten Schnellkupplung, die gesamthaft mit 3 gekennzeichnet ist, entnommen werden.

Die Hydraulikflüssigkeit durchströmt unter hohem Druck in Axialrichtung die Schnellkupplung 3, wie schematisch durch den Pfeil (f) angedeutet ist.

Im Inneren des rohrförmigen Bauteiles 2 ist verschiebbar gegen die Wirkung von Federmitteln 4 und 5 ein Rohrkörper gelagert, der gesamthaft mit 6 gekennzeichnet ist und vom Stand der Technik her bekannt ist.

Im Abschnitt 7 des rohrförmigen Bauteiles 2 bauen sich aufgrund der vorhandenen Hydraulikflüssigkeit hohe Drücke auf.

Um ein unerwünschtes und nicht kontrollierbares Austreten der Hydraulikflüssigkeit über einen herkömmlichen Zapfanschluss 8 zu vermeiden, wird in dieser Zone eine Ringdichtung 9 vorgesehen, welche abdichtend am äußeren Mantel 100 des rohrförmigen Bauteiles 6 anliegt, das gegen die von der Feder 200 aufgebrachte Kraft verschiebbar ist.

Die Dichtung 9, wie sie besser aus der Figur 2 zu entnehmen ist, ist in einer Ausnehmung 10 untergebracht, welche in den Innenumfang des rohrförmigen Bauteiles eingebracht ist und gesamthaft mit 2 gekennzeichnet ist.

Um die ringförmige Dichtung 9 in ihre korrekte Arbeitslage zu halten und um zu vermeiden, dass sich verändernde hydraulische Drücke zu einem Verschieben der Dichtung 9 oder sogar zu einem Austreten der ringförmigen Dichtung 2 führen könnten, ist ein Spannring 11 vorgesehen, der ortsfest im Inneren des rohrförmigen Bauteiles 2 angeordnet ist.

Zwischen dem Außenumfang des Körpers 6 und dem Bauteil 2 ist ein sich in Umfangsrichtung erstreckender Kanal 12 vorgesehen.

In dem Kanal 12 gegenüberliegend ist ein weiterer Kanal 13 geschaffen. Beide Kanäle 12 und 13 erstrecken sich in Richtung des Zapfanschlusses 8.

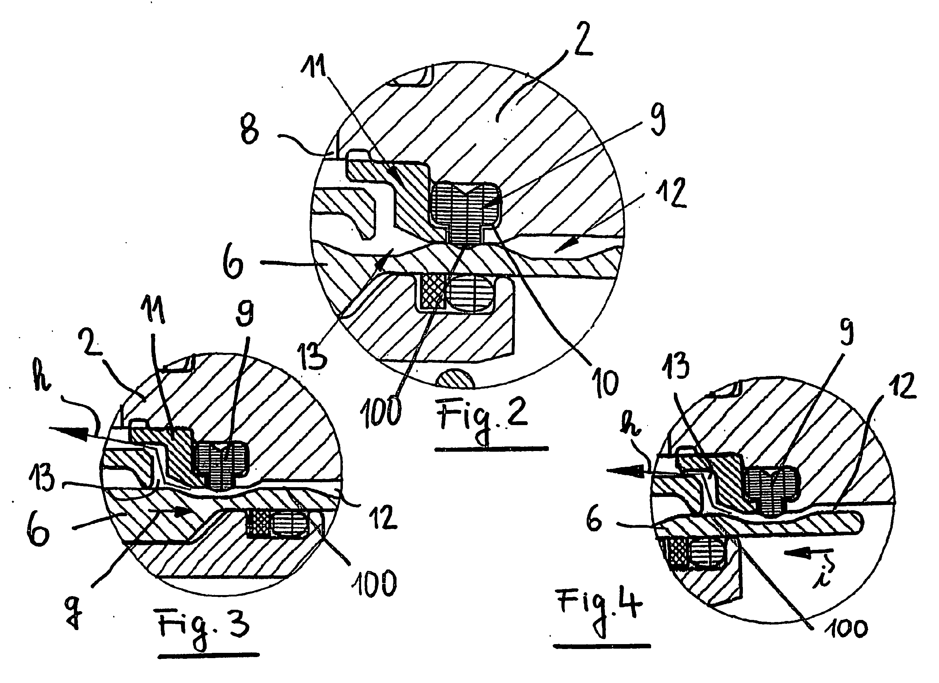

In Figur 3 ist im Detail der rohrförmige Körper 6 dargestellt, der in das rohrförmige Bauteil eingesetzt ist, wie durch den Pfeil (g) dargestellt ist.

Durch die Verschiebung (g) erfolgt ein Freilegen der Kanäle 12 bzw. 13, was ein Austreten der Hydraulikflüssigkeit über die Kanäle 12, 13 in Richtung des Zapfanschlusses 8 ermöglicht. Dadurch erfolgt in diesem Abschnitt der Vorrichtung eine Verminderung des Hydraulikdruckes, was zu einer Vereinfachung des Zusammensfüge- bzw. des Trennvorganges des schaftartigen Bauteiles 1 gegenüber dem rohrförmigen Bauteil führt.

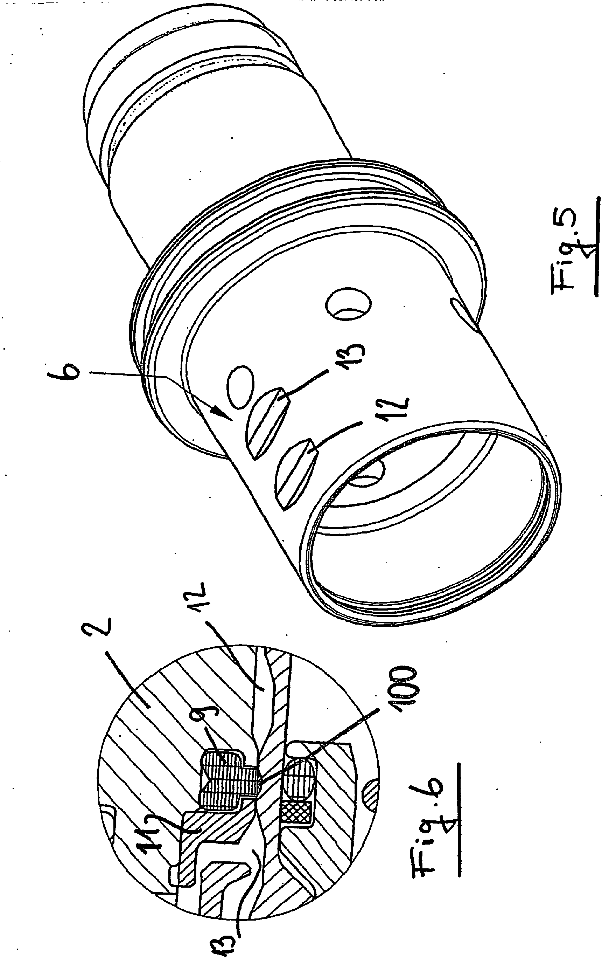

In Figur 4 ist schematisch das Entnehmen des schaftartigen Bauteiles 1 aus dem rohrförmigen Bauteil 2 dargestellt, was zu einem Verschieben des rohrförmigen Körpers 6, wie in Figur 4 durch den Pfeil (i) dargestellt ist, führt.

Auch in dieser Lage gibt die Dichtung 9 die Kanäle 12 und 13 frei und erlaubt ein Abfließen der Hydraulikflüssigkeit, wie durch den Pfeil (h) dargestellt in Richtung des Zapfanschlusses.

In Figur 5 ist der rohrförmig ausgebildete Körper 6 in Perspektive dargestellt.

Es sind der Kanal 12 sowie der Kanal 13 erkennbar, welche aufgrund der durch den rohrförmigen Körper 6 eingenommenen Stellung gegenüber der Dichtung 9 ein Abfließen der Hydraulikflüssigkeit in Richtung des Zapfanschlusses 8 ermöglichen.

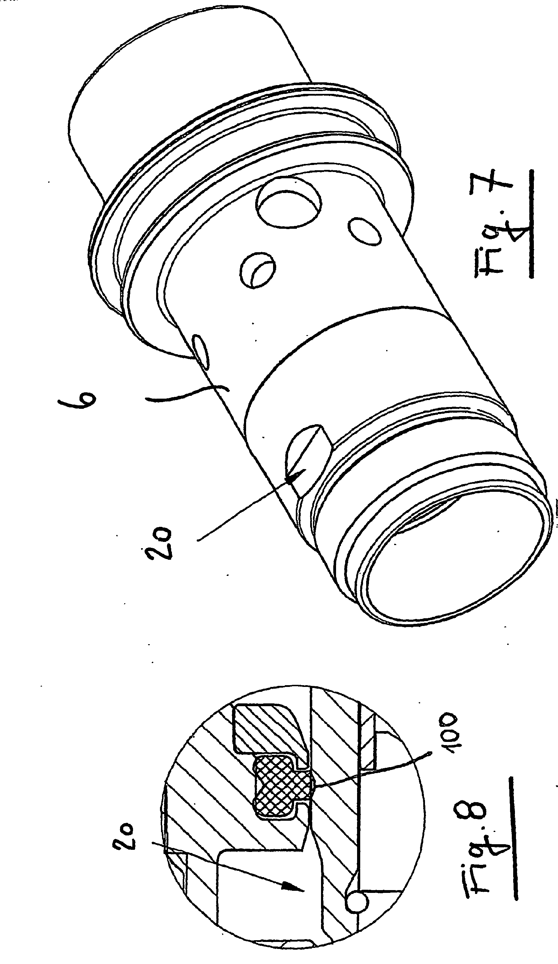

In Figur 6 sind im Detail das rohrförmige Bauteil 2, die Ringdichtung 9, eine Spannmuffe 11 sowie Ausnehmungen dargestellt, die durch die Kanäle 12 und 13 gebildet sind.

Figur 7 zeigt ein rohrförmiges Bauteil 6 in perspektivischer Darstellung, wobei das Bauteil mit einer einzigen Ausnehmung 20 ausgerüstet ist; daraus folgt, dass der Zapfvorgang nur während des verbindungsvorganges des schaftartigen Bauteiles 1 mit dem rohrförmigen Bauteil 2 erfolgt.

Der Detailzeichnung gemäß Figur 8 kann entnommen, dass ein Zapfvorgang ausschließlich während des Zusammenfügevorganges des schaftartigen Bauteiles mit dem rohrförmigen ausgebildeten Bauteil erfolgt.

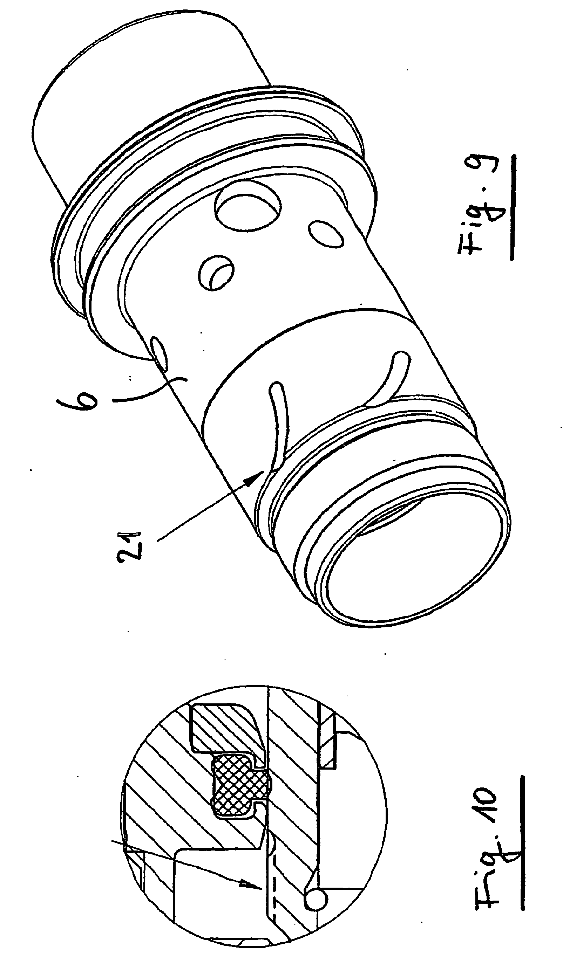

Der Figur 9 kann entnommen werden, dass das rohrförmige ausgebildete Bauteil 6 Kanäle 21 aufweist, die wendelartigen Verlauf haben, dabei sind die Kanäle 21 über das rohrförmige Bauteil 6 verteilt und erstrecken sich in Umfangsrichtung.

Bei der in Figur 11 dargestellten Ausführungsform weist das rohrförmige Bauteil 6 Kanäle 22 auf, die parallel zur Längsachse des rohrförmigen Bauteiles 6 angeordnet sind und sich in Umfangsrichtung des rohrförmigen Bauteiles erstrecken.

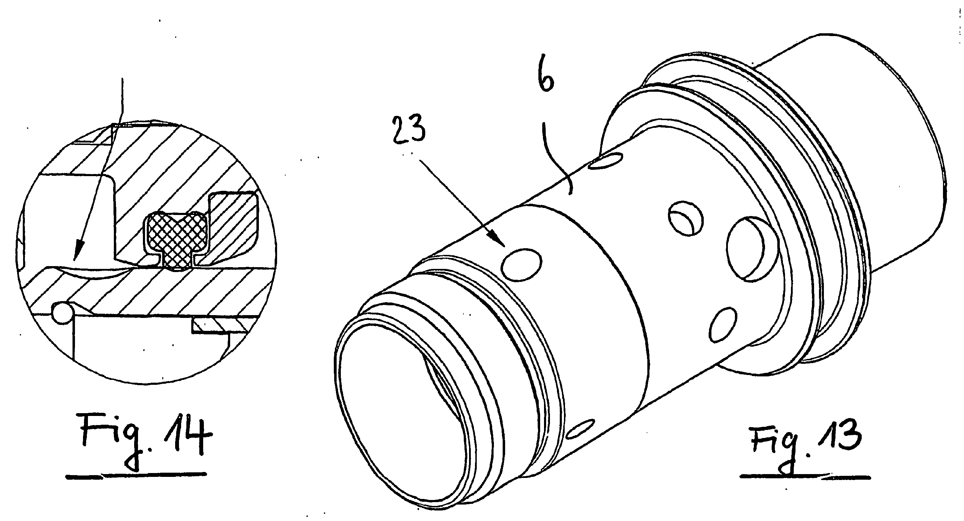

Der Figur 13 kann entnommen werden, dass ein für den Zapfvorgang vorgesehener Kanal auch durch kalottenartige Ausnehmungen 23 gebildet werden kann, wobei diese Ausnehmungen in den Körper 6 eingebracht sind und in Umfangsrichtung dieses Bauteiles 6 verteilt angeordnet sind.

Die Arbeitsweise der Schnellkupplung gemäß der vorstehenden Erfindung ist folgende:

Wenn das freie Ende der ringförmig ausgebildeten Dichtung 9 dichtend am nicht unterbrochenen Umfang des Rohrkörpers 6 anliegt, wird kein Zapfeffekt für die Hydraulikflüssigkeit erreicht, die Flüssigkeit fließt ausschließlich, wie durch den Doppelpfeil (f) in Figur 1 angegeben ist, im Inneren des schaftartigen Bauteiles 1 sowie im Inneren des rohrförmigen Bauteiles 2.

Durch Verschieben des rohrförmig ausgebildeten Körpers 6 während des Zusammenfügevorganges der Bauteile 1 und 2 bzw. während des Trennvorganges der Bauteile 1, 2 wird eine Öffnung in Übereinstimmung mit der durch die Dichtung 9 abgedichteten Zone geschaffen, wogegen bei Aufhebung dieser Dichtwirkung durch Freigabe des Flüssigkeitsflusses über den Kanal 12 bzw. über den Kanal 13 es ermöglicht wird, eine Zapfzone aufzubauen, die das Austreten der Flüssigkeit über den Anschluss 8 jedes Mal dann erlaubt, wenn ein Zusammenfügevorgang bzw. ein Trennvorgang zwischen den Bauteilen der Schnellkupplung erfolgt.

## Patentansprüche

1. Schnellkupplung (3), deren Bauteile (1, 2) bei Vorhandensein eines Druckes in einer Hydraulikflüssigkeit zusammenfügbar bzw. lösbar ausgebildet sind, **dadurch gekennzeichnet, dass** ein rohrförmiger Körper (6), der verschiebbar im Inneren eines rohrförmigen Bauteiles (2) gelagert ist, eine sich in umfangsrichtung erstreckende Dichtfläche (100) aufweist, die mit einer durch einen Spannring (11) ortsfest gelagerten Ringdichtung (9) zusammenarbeitet, wobei zu beiden Seiten der Dichtfläche (100) des verschiebbar angeordneten Körpers (6) ein sich in Umfangsrichtung erstreckender erster Abflusskanal (12) sowie ein sich in Umfangsrichtung erstreckender zweiter Abflusskanal (13) für die Hydraulikflüssigkeit vorgesehen ist und die Abflusskanäle (12, 13) bei freiliegender Dichtfläche (100) mit einem Zapfanschluss (8) in Verbindung stehen.

2. Schnellkupplung, nach Patentanspruch 1, **dadurch gekennzeichnet, dass** der rohrförmig ausgebildete Körper (6) mehrere Kanäle (21) für den Abfluss der Hydraulikflüssigkeit aufweist, und diese Kanäle (21) wendelförmigen Verlauf haben und in Umfangsrichtung um den rohrförmigen Körper (6) verteilt angeordnet sind.

3. Schnellkupplung, nach Patentanspruch 1, **dadurch gekennzeichnet, dass** der rohrförmige Körper (6) Abflusskanäle (22) aufweist, die parallel gegenüber der Längsachse des rohrförmigen Körpers (6) angeordnet sind, und die Kanäle (22) sich in Umfangsrichtung des rohrförmigen Körpers (6) erstrecken.

4. Schnellkupplung, nach Patentanspruch 1, **dadurch gekennzeichnet, dass** die Abflusskanäle (23) durch Ausnehmungen (23) gebildet sind, die Form einer Kugelkalotte aufweisen und in den rohrförmigen Körper (6) eingebracht und in Umfangsrichtung um den rohrförmigen Körper (6) verteilt angeordnet sind.

## Claims

1. Quick coupling (3), the structural parts (1, 2) of which are configured such that they can be joined together or separated in the presence of a pressure in a hydraulic fluid, **characterized in that** a tubular body (6), which is mounted displaceably inside a tubular structural part (2), has a sealing surface (100) extending in the peripheral direction, which cooperates with a ring seal (9) fixedly mounted by a clamping ring (11), on both sides of the sealing surface (100) of the displaceably disposed body (6) a first drainage channel (12) extending in the peripheral direction and a second drainage channel (13) extending in the peripheral direction being provided for the hydraulic fluid and the drainage channels (12, 13) being connected to a tapping connection (8) when the sealing surface (100) is bare.

2. Quick coupling according to Patent Claim 1, **characterized in that** the body (6) of tubular configuration has a plurality of channels (21) for the drainage of the hydraulic fluid, and these channels (21) have a helical course and are arranged distributed in the peripheral direction around the tubular body (6).

3. Quick coupling according to Patent Claim 1, **characterized in that** the tubular body (6) has drainage channels (22) which are arranged parallel to the longitudinal axis of the tubular body (6), and the channels (22) extend in the peripheral direction of the tubular body (6).

4. Quick coupling according to Patent Claim 1, **characterized in that** the drainage channels (23) are formed by recesses (23), which have the form of a spherical cap and are inserted into the tubular body (6) and are arranged distributed in the peripheral direction around the tubular body (6).

## Revendications

1. Raccord rapide (3), dont les composants (1, 2) sont réalisés de manière à pouvoir être assemblés ou détachés en présence d'une pression dans un liquide hydraulique, **caractérisé en ce qu'**un corps tubulaire (6) qui est monté de manière à pouvoir coulisser à l'intérieur d'un composant tubulaire (2), présente une surface d'étanchéité (100) s'étendant dans la direction périphérique, qui coopère avec un joint d'étanchéité annulaire (9) supporté fixement par une bague de serrage (11), des deux côtés de la surface d'étanchéité (100) du corps (6) disposé de manière à pouvoir coulisser étant prévu un premier canal d'écoulement (12) s'étendant dans la direction périphérique ainsi qu'un deuxième canal d'écoulement (13) s'étendant dans la direction périphérique pour le liquide hydraulique, et les canaux d'écoulement (12, 13) étant en liaison avec un raccord de robinet (8) lorsque la surface d'étanchéité (100) est exposée.

2. Raccord rapide selon la revendication 1, **caractérisé en ce que** le corps tubulaire (6) présente plusieurs canaux (21) pour l'écoulement du liquide hydraulique, et ces canaux (21) ont une allure hélicoïdale et sont répartis dans la direction périphérique autour du corps tubulaire (6).

3. Raccord rapide selon la revendication 1, **caractérisé en ce que** le corps tubulaire (6) présente des canaux d'écoulement (22) qui sont disposés parallèlement à l'axe longitudinal du corps tubulaire (6) et les canaux (22) s'étendent dans la direction périphérique du corps tubulaire (6).

4. Raccord rapide selon la revendication 1, **caractérisé en ce que** les canaux d'écoulement (23) sont formés par des évidements (23) qui présentent la forme d'une calotte sphérique et qui sont pratiqués dans le corps tubulaire (6) et sont répartis dans la direction périphérique autour du corps tubulaire (6).
